# EUROPEAN PATENT APPLICATION

(11) **EP 1 638 217 A1**
(43) Date of publication of application: **22.03.2006**
(21) Application number: 04735506.0
(22) Date of filing: 31.05.2004
(51) Int. Cl.: H04B 3/48

(54) **COMMUNICATION SYSTEM**

(30) Priority: 24.06.2003 JP 2003179179
(71) Applicant: Hitachi Kokusai Electric Inc., Tokyo 164-8511 (JP)
(72) Inventor: Hoshigami, H., Hitachi Kokusai Elect. Inc, Nakano-ku, Tokyo 1648511 (JP); Nakata, O., Hitachi Kokusai Electric Inc., Nakano-ku, Tokyo 1648511 (JP); Shiobara, T., Hitachi Kokusai Electric Inc, Nakano-ku, Tokyo 1648511 (JP)
(74) Representative: Nicholls, Michael John
(86) International application number: PCT/JP2004/007863
(87) International publication number: WO 2004/114542

(57) **Abstract**

In a communication system for communicating a plurality of frequency signals between a first apparatus 1 and a second apparatus 2 via a common cable 3, a level loss component of each of the frequency signals in the cable is effectively corrected. Both transmission-sided reference frequency signal level detecting means 41 and 43 of the first apparatus, and reception-sided reference frequency signal level detecting means 71 and 73 of the second apparatus detect a level of a frequency signal which constitutes a reference among frequency signals which are transmitted from the first apparatus to the second apparatus via the cable. In the first apparatus, out-of-reference frequency signal level control means 44 to 51, and 32 to 35 control levels of the frequency signals other than the frequency signal which constitutes the reference and is communicated between the first apparatus and the second apparatus via the cable based upon a compared result between results detected in the first apparatus and results detected in the second apparatus.

## Description

### TECHNICAL FIELD

The present invention is related to a communication system for communicating a plurality of frequency signals via a common cable between a first apparatus and a second apparatus. More specifically, the invention is directed to a communication system capable of effectively correcting level loss components of the respective frequency signals in the cable.

### BACKGROUND ART

For instance, in a wireless base station system in which an indoor unit (IDU) is connected via a single cable to an outdoor unit (ODU), a plurality of frequency signals are multiplexed with each other and the multiplexed frequency signal is communicated via this single cable. In such a wireless base station, while a variable gain device is provided in either one unit or both units to be connected, when an operation is commenced, and the cable is connected, a calibration work must be carried out by employing a reference test signal (calibration-purpose signal) and a measuring instrument every frequency signal.

However, in such a wireless base station system, the following event may probably occur. That is, in the case that losses of the cable are fluctuated due to an aging effect and an environmental change, and in such a case that losses of the cable are inaccurate due to calibration errors, misoperations, and the like, the wireless base station system is operated under such a condition that the errors are still contained.

Also, in the case that installation places of units are remote places such as mountain villages, cumbersome transports of instruments and cumbersome operations of workers are necessarily required when calibration operations are carried out. Also, in the case that units are installed at tower tops, specific risky works are necessarily performed.

Further, re-calibration works are required in a perioridic manner.

Losses in cables are changed due to lengths of these cables, individual differences thereof, and the like. Losses in cables are changed due to frequencies of signals which are transferred via cables, and also, due to environmental changes, and the like.

For example, as to systems such as an FWA (Fixed Wireless Access), in a wireless station apparatus (wireless station system) and a subscriber station system (subscriber station system) having such a form that an outdoor unit (ODU) and an indoor unit (IDU) have been connected to each other via a communication cable, a method how to set gains of transmission amplifiers of the respective units has been considered (refer to, for instance, patent publication 1).
Patent Publication 1
   JP-A-2002-190771

However, in the wireless base station system as indicated in the above-described prior art, in such a case that the plural frequency signals are communicated via the single cable, the measuring operation has been carried out with respect to each of these plural frequency signals so as to correct the loss components thereof with respect to this single cable. As a result, such loss correcting operations cannot be effectively carried out.

The invention has been made to solve such a conventional problem, and has an object to provide a communication system in which while a plurality of frequency signals are communicated between a first apparatus and a second apparatus via a common cable, level loss components of the respective frequency signals in the cable can be effectively corrected.

### DISCLOSURE OF THE INVENTION

To achieve the above-described object, in a communication system according to the invention, in the case that a plurality of frequency signals are communicated between a first apparatus and a second apparatus via a common cable, the below-mentioned process operations are carried out.

In other word, in the first apparatus, a transmission-sided reference frequency signal level detecting means detects a level of a frequency signal which constitutes a reference among the frequency signals which are transmitted via the cable with respect to the second apparatus.

In the second apparatus, a reception-sided reference frequency signal level detecting means detects a level of a frequency signal which constitutes a reference and is received from the first apparatus via the cable.

Then, in the communication system, an out-of-reference frequency signal level control means controls a level of a frequency signal other than the frequency signal which constitutes the reference and is communicated between the first apparatus and the second apparatus via the cable based upon a compared result between the result detected by the transmission-sided reference frequency signal level detecting means of the first apparatus, and the result detected by the reception-sided reference frequency signal level detecting means of the second apparatus.

As a consequence, when the plurality of frequency signals are communicated between the first apparatus and the second apparatus via the common cable, the levels of other frequency signals (namely, frequency signals other than frequency signal which constitutes reference) are controlled based upon the detected result of the level related to the frequency signal which constitutes the reference, so that the level loss components of the respective frequency signals in the cable can be effectively corrected.

In this case, as the first apparatus and the second apparatus, various sorts of apparatus may be employed respectively. As one example, since the first apparatus is connected to the second apparatus, for instance, a single apparatus (system) such as a base station apparatus is constructed.

Also, as the cable, various wired cables may be employed.

Also, as to a total number of plural frequency signals, various numbers may be employed.

Also, as to the plural frequency signals, for example, frequencies (otherwise, frequency bands) of the respective frequency signals are different from each other, and loss characteristics of levels when the plural frequency signals are transferred via the cable are different from each other.

Also, as each of the frequency signals, various signals may be employed.

Also, as directions along which the respective frequency signals are communicated, various direction modes may be used. For instance, the communication directions are given in that the respective frequency signals may be transmitted from the first apparatus, and then may be received by the second apparatus, or the respective frequency signals may be transmitted from the second apparatus, and then may be received by the first apparatus.

Also, as the frequency signal which constitutes the reference, various frequency signals may be employed. As one example, it is preferable to employ such a frequency signal which is continuously, or substantially continuously communicated between the first apparatus and the second apparatus.

Also, in the transmission-sided reference frequency level detecting means of the first apparatus and the reception-sided reference frequency level detecting means of the second apparatus, for instance, as a level of a frequency signal which constitutes the reference, an averaged value of this level may be detected. Concretely speaking, such an averaged value obtained by averaging the levels detected predetermined plural times may be employed, or an averaged value obtained by averaging levels detected within a predetermined time period may be employed.

Also, as a level of a frequency signal, various sorts of levels may be used. For instance, a level of electric power, a level of an amplitude, and the like may be employed.

Also, the out-of-reference frequency signal level control means may be provided in any unit within the communication system. For example, this out-of-reference frequency signal level control means may be provided in the first apparatus, or in the second apparatus, or may be distributedly equipped in both the first apparatus and the second apparatus. Otherwise, this out-of-reference frequency signal level control means may be provided in another apparatus.

Further, as the compared result between the result detected by the transmission-sided reference frequency signal level detecting means of the first apparatus, and the result detected by the reception-sided reference frequency signal level detecting means of the second apparatus, for example, such a result is employed which is obtained by comparing the levels obtained from these two detected results. As one example, since a control operation is carried out in such a manner that a difference of the levels obtained from these two detected results is made coincident with a predetermined value, or is made substantially coincident with this predetermined value, the loss component of the frequency signal which constitutes the reference in the cable can be corrected.

Also, as the frequency signal (namely, frequency signal other than frequency signal which constitutes reference) which constitutes the subject to be controlled by the out-of-reference frequency signal level control means, various sorts of frequency signals may be employed. For instance, all of the frequency signals other than the frequency signal which constitutes the reference may be employed. Alternatively, a partial and arbitrarily-selected number of frequency signals other than the frequency signal which constitutes the reference may be employed.

Also, as the mode for controlling the level of the frequency signal (frequency signal other than frequency signal which constitutes reference) by the out-of-reference frequency signal level control means, various control mode may be employed. For example, such a control mode is used by which the loss component of this frequency signal in the cable is corrected. As one example, such a mode for performing a level control operation based upon preset information may be employed.

As one structural example, in the communication system according to the invention, the below-mentioned arrangement is made.

That is to say, the transmission-sided reference frequency signal level detecting means of the first apparatus detects an averaged value of the levels of the frequency signal which constitutes the reference among the frequency signals transmitted via the cable with respect to the second apparatus.

The reception-sided reference signal level detecting means of the second apparatus detects an averaged value of the levels of the frequency signal which constitutes the reference and is received from the first apparatus via the cable.

Also, in the second apparatus, a reception-sided reference frequency signal level detected result transmitting means transmits the detected result by the reception-sided reference frequency signal level detecting means with respect to the first apparatus.

Also, in the first apparatus, a reception-sided reference frequency signal level detected result receiving means receives the detected result by the reception-sided reference frequency signal level detecting means of the second apparatus, which is transmitted by the reception-sided reference frequency signal level detected result transmitting means of the second apparatus.

Also, the out-of-reference frequency signal level control means is provided in the first apparatus.

In the out-of-reference frequency signal level control means, a reference frequency signal level control means controls a level of a frequency signal which constitutes the reference and is transmitted via the cable to the second apparatus based upon a compared result (namely, result detected by reception-sided reference frequency level detecting means of second apparatus) between the detected result by the transmission-sided reference frequency signal level detecting means and the detected result which is received by the reception-sided reference frequency signal level detected result receiving means. And also, a reference frequency signal level controlled result out-of-reference frequency signal level control mode corresponding item storage means stores thereinto a corresponding item between the controlled result by the reference frequency signal level control means and a mode for controlling the level of the frequency signal other than the frequency signal which constitutes the reference and is communicated between the first apparatus and the second apparatus via the cable.

Then, in the out-of-reference frequency signal level control means, the level of the frequency signal other than the frequency signal which constitutes the reference and is communicated between the first apparatus and the second apparatus via the cable is controlled based upon the storage content of the reference frequency signal level controlled result out-of-reference frequency signal level control mode corresponding item storage means in such a control mode corresponding to the controlled result by the reference frequency signal level control means.

As a consequence, for example, even when such measuring operations as to levels of frequency signals other than the frequency signal which constitutes the reference are not carried out, the controlled result as to the level of the frequency signal which constitutes the reference is acquired, and then, a control mode corresponding to this acquired controlled result is employed, so that the levels of the frequency signals other than the frequency signal which constitutes the reference can be controlled.

In this case, as the result detected by the reception-sided reference frequency signal level detecting means of the second apparatus, which is transmitted by the reception-sided reference frequency signal level detected result transmitting means of the second apparatus, various detected results may be employed. For example, information as to a value of a detected level may be employed, or another information made based upon the value of the detected level may be employed.

Also, as the detected result by the reception-sided reference frequency level detecting means of the second apparatus, for instance, this detected result is transmitted to the first apparatus via the common cable through which a plurality of frequency signals are communicated. As another structural example, such a mode that the detected result is transmitted to the first apparatus via another cable may be employed, or another mode that the detected result is transmitted to the first apparatus via a wireless communication may be employed.

Also, as the mode for controlling the level of the frequency signal other than the frequency signal which constitutes the reference and is communicated between the first apparatus and the second apparatus via the cable, which is stored in the reference frequency signal level controlled result out-of-reference frequency signal level control mode corresponding item storage means, for instance, a control mode is set with respect to each of the frequency signals. As one example, such a control mode is set by which a loss component in the cable can be corrected with respect to each of the frequency signals.

Also, as the reference frequency signal level controlled result out-of-reference frequency signal level control mode corresponding item storage means, for instance, this storage means may be arranged by employing a memory.

In the communication system according to the invention, as one structural example, the following arrangement is employed.

That is to say, the communication system corresponds to a wireless base station system.

Also, the first apparatus corresponds to an indoor unit. The second apparatus corresponds to an outdoor unit.

Also, the frequency signal which constitutes the reference corresponds to a signal of a transmission system.

Also, a plurality of frequency signals are multiplexed and the multiplexed signal is communicated between the first apparatus and the second apparatus via the cable.

As a consequence, in such a wireless base station system, when a plurality of frequency signals are multiplexed and the multiplexed signal is communicated between the indoor unit and the outdoor unit via the common cable, while the signal of the transmission system is employed as the reference, loss components of these plural frequency signals in the cable can be effectively corrected.

In this case, as the wireless base station system, various types of systems may be employed. For instance, a base station of a fixed wireless access (FWA) system, a base station of a portable telephone system, a base station of a personal handyphone system (PHS), and the like may be employed.

Also, as the indoor unit and the outdoor unit, various sorts of apparatus may be utilized respectively. As one example, while an antenna is provided in the outdoor unit, a signal which is transmitted from the indoor unit to the outdoor unit is transmitted via the antenna in a wireless manner, and then, a signal which is received from the antenna in a wireless manner is transmitted from the outdoor unit to the indoor unit.

Also, as the signal of the transmission system, for instance, such a signal is employed which constitutes a subject signal transmitted from the antenna in the wireless manner, which is transmitted from the indoor unit to the outdoor unit. Such a signal is continuously, or substantially continuously present under normal condition.

Also, as the multiplexing manner, for instance, a frequency multiplexing method is employed.

Structural examples according to the invention is further represented.

As one structural example, in the communication system according to the invention, the below-mentioned arrangement is made.

That is to say, the transmission-sided reference frequency signal level detecting means of the first apparatus detects an averaged value of the levels of the frequency signal which constitutes the reference among the frequency signals transmitted via the cable with respect to the second apparatus.

In the out-of-reference frequency signal level control means, a reception-sided reference frequency signal level detected result averaging means provided in the first apparatus averages the detected results which are received from the reception-sided reference frequency signal level detected result receiving means of the first apparatus.

Also, in the out-of-reference frequency signal level control means, the level of the frequency signal other than the frequency signal which constitutes the reference and is communicated between the first apparatus and the second apparatus via the cable is controlled based upon a compared result between the detected result by the transmission-sided reference frequency signal level detecting means of the first apparatus and the averaged result by the reception-sided reference frequency signal level detected result averaging means of the first apparatus.

In the communication system according to the invention, for example, levels of the respective frequency signals are controlled every frequency signal.

In the communication system according to the invention, as one structural example, a corresponding item between the controlled result by the reference frequency signal level control means and a mode for controlling the level of the frequency signal other than the frequency signal which constitutes the reference and is communicated between the first apparatus and the second apparatus via the cable is set based upon a characteristic of a level loss in the cable in such a case that each of the frequency signals is communicated via the cable. The level loss characteristics are normally different from each other with respect to these frequency signals.

In the communication system according to the invention, as one structural example, as the controlled result by the reference frequency signal level control means, information as to lengths of the cable which are predicable by the control operation by the reference frequency signal level control means is employed. For instance, in the level control of the frequency signal based upon the detected result of the level as to the frequency signal which constitutes the reference, a length of a cable may be predicted, and levels of frequency signals other than the frequency signal which constitutes the reference may be controlled based upon this predicted result.

As one structural example, in the communication system according to the invention, the reference frequency signal level control means controls a level of such a frequency signal which constitutes the reference based upon both the detected result by the transmission-sided reference frequency signal level detecting means and the detected result which is received by the reception-sided reference frequency signal level detected result receiving means (otherwise, averaged result made by reception-sided reference frequency signal level detected result averaging means) in such a manner that a mode for controlling a level of a frequency signal which constitutes the reference and is transmitted via the cable with respect to the second apparatus can satisfy a predetermined condition. In this case, as the predetermined condition, various conditions may be employed. For example, such a condition for correcting the loss component of the frequency signal which constitutes the reference in the cable is employed.

### BRIEF DESCRIPTION OF THE DRAWINGS

Fig. 1 is a diagram for indicating a schematic structural example of a wireless base station system according to an embodiment of the invention.
Fig. 2 is a diagram for showing a structural example of a wireless base station system according to a first embodiment of the invention.
Fig. 3 is a diagram for indicating an example of sequential process operations executed by an indoor unit.
Fig. 4 is a diagram for representing an example of sequential process operations executed by an outdoor unit.
Fig. 5 is a diagram for showing a structural example of a wireless base station system according to a second embodiment of the invention.

### BEST MODE FOR CARRYING OUT THE INVENTION

Referring now to drawings, embodiments according to the invention will be described with reference to drawings.

The present embodiment indicates such a case that the invention has been applied to a wireless base station system arranged by converting an indoor unit (IDU) to an outdoor unit (ODU) by a cable.

First, a description is made of an outline of the wireless base station system according to the invention.

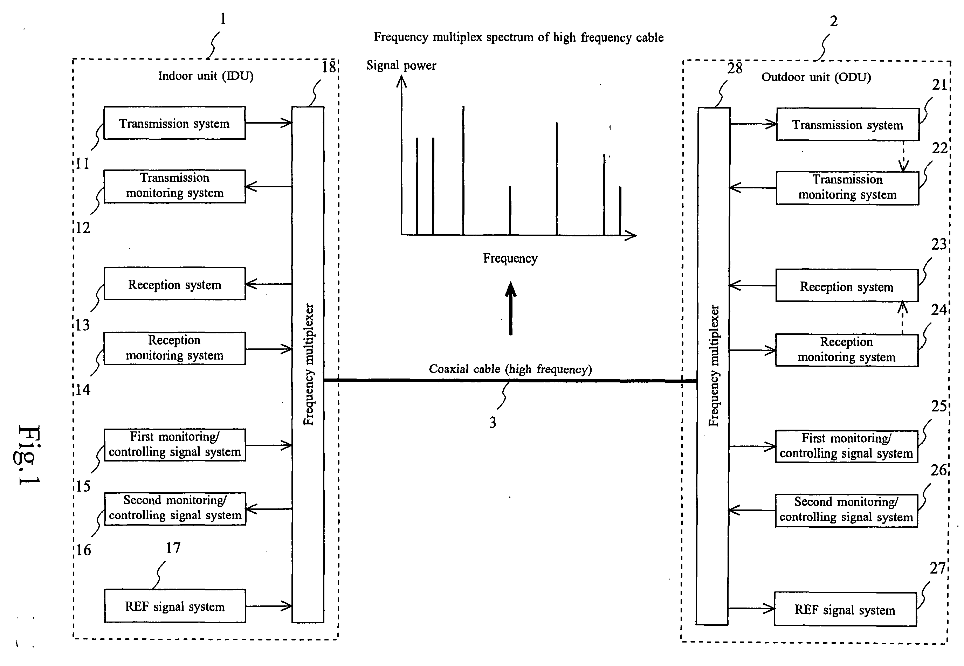

In Fig. 1, there is shown such a structural example of the wireless base station system according to the present embodiment.

The wireless base station system, according to the present embodiment, has been arranged by employing an indoor unit (IDU) 1, an outdoor unit (ODU) 2, and a coaxial cable 3 corresponding to a high frequency cable.

The indoor unit 1 has been connected to the outdoor unit 2 via a single piece of the coaxial cable 3.

Also, an antenna (not shown) has been provided on the outdoor unit 2.

The indoor unit 1 has been equipped with a transmission system 11, a transmission monitoring system 12, a reception system 13, a reception monitoring system 14, a first monitoring/controlling signal system 15, a second monitoring/controlling signal system 16, a reference signal (REF signal) system 17, and a frequency multiplexer 18.

The outdoor unit 2 has been provided with a transmission system 21, a transmission monitoring system 22, a reception system 23, a reception monitoring system 24, a first monitoring/controlling signal system 25, a second monitoring/controlling signal system 26, a reference signal (REF signal) system 27, and a frequency multiplexer 28.

Then, a signal of the transmission system is transmitted from the transmission system 11 of the indoor unit 1 to the transmission system 21 of the outdoor unit 2, a signal of the transmission monitoring system is transmitted from the transmission monitoring system 22 of the outdoor unit 2 to the transmission monitoring system 12 of the indoor unit 1, a signal of the reception system is transmitted from the reception system 23 of the outdoor apparatus 2 to the reception system 13 of the indoor unit 2, a signal of the reception monitoring system is transmitted from the reception monitoring system 14 of the outdoor unit 1 to the reception monitoring system 24 of the outdoor unit 2, a first monitoring/controlling signal is transmitted from the first monitoring/controlling signal system 15 of the indoor unit 1 to the first monitoring/controlling signal system 25 of the outdoor unit 2, a second monitoring/controlling signal is transmitted from the second monitoring/controlling signal system 26 of the outdoor unit 2 to the second monitoring/controlling signal system 16 of the indoor unit 1, and also, a reference signal (REF signal) is transmitted from the REF signal system 17 of the indoor unit 1 to the REF signal system 27 of the outdoor unit 2.

Also, the signals of the above-explained 7 systems which are communicated between the indoor unit 1 and the outdoor unit 2 are frequency-multiplexed by both the function of the frequency multiplexer 18 of the indoor unit 1 and the function of the frequency multiplexer 28 of the outdoor unit 2, and then, the frequency-multiplexed signal is transferred via the common coaxial cable 3. The frequency multiplexer 18 of the indoor unit 1 and the frequency multiplexer 28 of the outdoor unit 2 transmit/output such a signal which should be transmitted to the coaxial cable 3, and separate such a signal which is received/inputted from he coaxial cable 3 with respect to each of frequencies of the respective systems, and then, input the separated signals to the relevant systems.

Also, this drawing indicates an example of an image of a spectrum of a signal which has been frequency-multiplexed and is transferred via the coaxial cable 3. An abscissa of the graphic representation shows a frequency and an ordinate thereof indicates electric power of the signals.

As can been seen from this spectrum, in the wireless base station system of this example, a plurality of signals which are required to be communicated between the indoor unit 1 and the outdoor unit 2 are set as high frequency signals having different frequencies, and these high frequency signals are multiplexed by the frequency multiplexers 18 and 28, and then, the frequency-multiplexed high frequency signals are communicated.

In this case, the signal of the transmission system corresponds to, for example, a signal with respect to a terminal station apparatus (not shown) which constitutes a communication counter party, and this signal is transmitted from the indoor unit 1 to the indoor unit 2 via the coaxial cable 3, and then, is transmitted from the antenna of the outdoor unit 2 in a wireless manner.

Also, the signal of the reception system corresponds to, for instance, such a signal from a terminal station apparatus (not shown) which constitutes a communication counter party, and this signal is received by the antenna of the outdoor unit 2, and then, is transmitted from the outdoor unit 2 to the indoor unit 1 via the coaxial cable 3.

It should be noted that while the indoor unit 1 has been connected to, for example, a network (not shown) of a backbone, the indoor unit 1 communicates the signal of the transmission system and the signal of the reception system with respect to this network.

The signal of the transmission monitoring system corresponds to a monitor signal related to the transmission system, and may be utilized in various arbitrary purposes.

The signal of the reception monitoring system corresponds to a monitor signal related to the reception system, and may be utilized in various arbitrary purposes.

The first monitoring/controlling signal corresponds to such a signal for performing a monitoring operation and a controlling operation between, for example, the indoor unit 1 and the outdoor unit 2, and may be used in various arbitrary purposes.

The second monitoring/controlling signal corresponds to such a signal for performing a monitoring operation and a controlling operation between, for example, the indoor unit 1 and the outdoor unit 2, and may be used in various arbitrary purposes. It should also be noted that in this embodiment, information used to report a level of a received signal as to the transmission system is communicated from the outdoor unit 2 to the indoor unit 1 by employing the second monitoring/controlling signal.

The REF signal corresponds to, for example, such a signal which constitutes a reference such as a frequency.

Also, generally speaking, a high frequency cable used as the coaxial cable 3 owns such a frequency characteristic that the higher a frequency of a signal to be transferred is increased, the larger a loss thereof is increased. This signal loss is in directly portional to a length of this high frequency cable.

Also, the length of the coaxial cable 3 is changed, depending upon environments of installation places of the indoor unit 1 and the outdoor unit 2, and a distance between the indoor unit 1 and the outdoor unit 2, and the like.

Next, a first embodiment according to the invention will now be described.

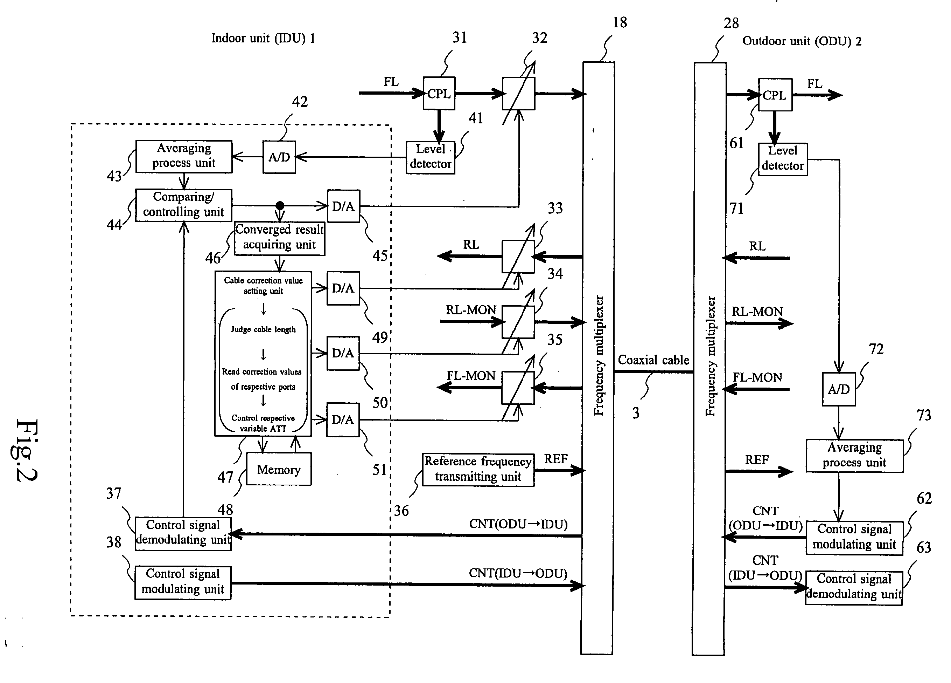

Fig. 2 indicates a structural example of a wireless base station system of this first embodiment. It should be understood that a structural arrangement of this wireless base station system is the same as that shown in Fig. 1.

In the indoor unit 1, a coupler (CPL) 31 and a variable gain device 32 have been equipped as the transmission system 11; a variable gain device 33 has been provided as the reception unit 13, a variable gain device 34 has been provided as the reception monitoring system 14; a variable gain device 35 has been provided as the transmission monitoring system 12; a reference frequency transmitting unit 36 has been provided as the REF signal system 17; a control signal demodulating unit 37 has been equipped as the second monitoring/controlling system 16; and a control signal modulating unit 38 has been equipped as the first monitoring/controlling system 15.

Also, in the indoor unit 1, as a structural unit for controlling levels of signals in the transmission system, the reception system, the reception monitoring system, and the transmission monitoring system by the variable gain devices 32 to 35, the following units have been provided: a level detector 41, an A/D (analog-to-digital) converter 42, an averaging process unit 43, a comparing/controlling unit 44, a D/A (digital-to-analog) converter 45 of the transmission system, a converged result acquiring unit 46, a cable correcting value setting unit 47, a memory 48, a D/A converter 49 of the reception system, a D/A converter 50 of the reception monitoring system, and a D/A converter 51 of the transmission monitoring system.

In the outdoor unit 2, a coupler (CPL) 61 has been equipped as the transmission system 21; a control signal modulating unit 62 has been provided as the second monitoring/controlling signal system 26; and a control signal demodulating unit 63 has been provided as the first monitoring/controlling signal system 25.

Also, in the outdoor unit 2, a level detector 71, an A/D converter 72, and an averaging process unit 73 have been provided as a structural unit for controlling levels of signals of the transmission system, the reception system, the reception monitoring system, and the transmission monitoring system.

An example of operations is shown which are executed by the wireless base station system of this first embodiment.

Generally speaking, in a base station which is directed to mobile communications, a signal used for control channels is continuously transmitted with electric power equal to or higher than a predetermined power level. This signal is transmitted as the signal of the transmission system.

In the indoor unit 1, just after the apparatus is initiated, or initialized, electric power of a transmission signal (FL: forward link) of the transmission system is detected by the level detector 41 which is arranged at the prestage of both the frequency multiplexer 18 and the variable gain device 32. In this case, the level detector 41 has been constituted by a power detector in this embodiment.

The signal of the transmission system transmitted from the indoor unit 1 passes through the variable gain device 32, and is outputted to the coaxial cable 3 by the frequency multiplexer 18, and then, is inputted to the outdoor unit 2. This input signal is extracted by the frequency multiplexer 28 in the outdoor unit 2, and thereafter, the resulting signal passes through the coupler 61, and then is processed by way of an amplification, a frequency conversion, and the like. In this case, a structural unit (not shown) for performing the amplifying process and the frequency converting process, and the like has been provided at a post stage of the coupler 61.

Also, in the outdoor unit 2, the signal of the transmission system which has been received/inputted from the indoor unit 1 is derived by the coupler 71, and then, electric power of the derived signal is detected by the level detector 71. In this case, the level detector 71 has been constituted by a power detector in this embodiment.

It should also be understood that as to both the level detector 41 of the indoor unit 1 and the level detector 71 of the door unit 2, it is preferable to manage, for instance, both a temperature characteristic and an aging effect characteristic of a single level detector in sufficiently high precision. Also, it is preferable that these two level detectors 41 and 71 own the same circuits.

In the outdoor unit 2, the detected result obtained by the level detector 71 is converted from an analog signal into a digital signal by the A/D converter 72, and the digital signal is averaged by the averaging process unit 73, for instance, only for a predetermined time, and then, this averaged result is outputted to the control signal modulating unit 62. This averaged result corresponds to an averaged value of the electric power levels detected by the level detector 71, and information indicative of this averaged value is contained in the second monitoring/controlling signal modulated by the control signal modulating unit 73, and then, the resultant second monitoring/controlling signal is transmitted with respect to the indoor unit 1.

It should also be understood that it is preferable that this information is converted into, for example, a high frequency modulation signal having a frequency as low as possible by the control signal modulating unit 62, and then, this converted high frequency signal is transmitted. The reason why the low frequency is preferable is to improve that a changing width of losses caused by the length of the coaxial cable 3 is reduced.

In the indoor unit 1, the information transmitted from the control signal modulating unit 62 of the outdoor unit 2 is demodulated by the control signal demodulating unit 37, and then, this demodulated result is inputted to the comparing/controlling unit 44. This demodulated result indicates the information as to the averaged value which has been obtained in the averaging process unit 73 of the outdoor apparatus 2.

As a dynamic range of the control signal demodulating unit 37, for example, it is preferable that this dynamic range may have a sufficiently large margin with respect to such a loss range caused by a length of the coaxial cable 3 which is supposed to be used.

Also, in the indoor unit 1, the detected result of the power level as to the signal of the transmission system by the level detector 41 is converted from an analog signal into a digital signal by the A/D converter 42, and the digital signal is averaged by the averaging process unit 42 only for a predetermined time, and then, this averaged result is inputted to the comparing/controlling unit 44. This averaged result corresponds to an averaged value of the electric power levels detected by the level detector 41.

The comparing/controlling unit 44 of the indoor unit 1 compares the information entered from the averaging process unit 43 with the information entered from the control signal demodulating unit 37. Concretely speaking, as to an electric power level of a signal of the transmission system, the comparing control unit 44 compares the averaged value of the level which is the result detected by the level detector 41 of the indoor unit 1 with the averaged value of the level which is the result detected by the level detector 71 of the outdoor unit 2.

Then, the comparing/controlling unit 44 controls gain of the variable gain device 32 of the transmission system based upon this compared result in such a manner that the detected result (averaged result) of the electric power levels in the outdoor unit 2 may become a proper value with respect to the detected result (averaged result) of the electric power levels in the indoor unit 1.

In this case, the following control operations are carried out in the comparing/controlling unit 44. That is, for instance, a difference between the detected result (averaged result) obtained in the indoor unit 1 and the detected result (averaged result) obtained in the outdoor unit 2 is approximated to a preset value, and also, is made identical to such a set value on the output side, which is determined from the standard loss amount of a cable section which has been previously designed with respect to an input level. As other structural example, the comparing/controlling unit 44 may alternatively employ such a control mode that the detected result (averaged result) in the indoor unit 1 is made coincident with the detected result (averaged result) in the outdoor unit 2, and such a control mode may be employed by which losses of the signal of the transmission system occurred in the variable gain device 32 and the coaxial cable 3 become continuously constant.

The comparing/controlling unit 45 outputs a voltage signal to both the D/A converter 45 and the converged result acquiring unit 46, while the voltage signal is used so as to control the gain of the variable gain device 32 of the transmission system. This voltage signal is converted from the digital signal to an analog signal by this D/A converter 45, and then, the analog signal is inputted to a gain control terminal of the variable gain device 32. As a result, the gain of the variable gain device 32 of the transmission system is controlled to be adjusted.

Also, the comparing/controlling unit 45 repeatedly performs such an operation that the comparing/controlling unit 45 compares the input derived from the averaging process unit 43 with the input derived from the control signal demodulating unit 37, and controls the variable gain device 32 based upon this compared result in order that the gain of the variable gain device 32 becomes an optimum gain value. When the gain becomes the optimum gain value, it is so assumed that the operation of the comparing/controlling unit 45 is converged. In this embodiment, when a preset converging condition is achieved, it is so judged that the operation is converged.

When such a judgment is made that the converging condition is achieved, the control voltage of the variable gain device 32 outputted from the comparing/controlling unit 44 is acquired by the converged result acquiring unit 46, and then, a length of the coaxial cable 3 is judged by the cable correcting value setting unit 47 based upon this control voltage. It should be understood that the length of the coaxial cable 3 is judged based upon, for instance, information as to a loss amount per a unit length of the coaxial cable 3 every frequency, and the like.

Correction values related to the variable gain devices 33, 34, 35 have been previously stored in the memory 48 with respect to each of these variable gain devices 33, 34, 35 employed in the respective systems of the reception system, the reception monitoring system, and the transmission monitoring system, and further, with respect to each of the lengths of the coaxial cables 3, for example, when the memory 48 is manufactured. As the correction values, for instance, control values with respect to the variable gain devices may be employed.

After the cable correction value setting unit 47 judges a length of the coaxial cable 3, the cable correction value setting unit 47 reads out the correction values related to the variable gain devices 33, 34, and 35 of the respective systems, which have been stored in the memory 48 in correspondence with this judgment result, and then, outputs voltage signals with respect to the variable gain devices 33, 34, 35 of the respective systems in accordance with these read correction values. These voltage signals are converted from the digital signals into analog signals by the D/A converters 49, 50, 51 of the respective systems, and then, these analog signals are entered to the gain control terminals of the variable gain devices 33, 34, 35 of the respective systems. As a result, the gains of the variable gain devices 33, 34, 35 of the respective systems may be controlled, so that the adjusting operation is accomplished.

In this embodiment, it should also be noted that a variable attenuator (variable ATT) has been employed as each of the variable gain devices 32, 33, 35. As other structural examples, various devices such as a variable gain amplifier may be alternatively employed. In view of such a technical point that these variable gain devices may correct the loss components of the coaxial cable 3, it is conceivable that the employment of such a variable gain amplifier is preferable.

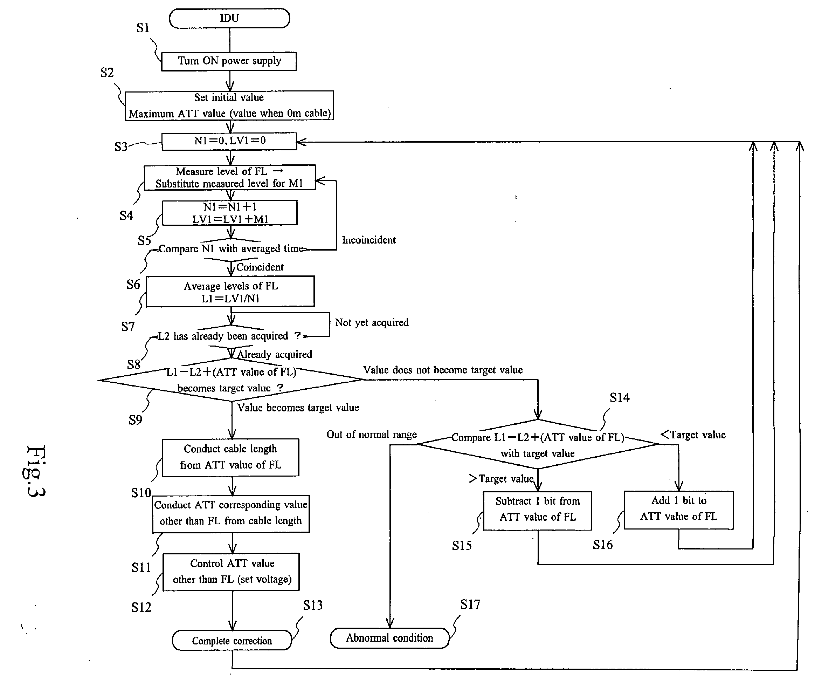

Fig. 3 shows an example of operations which are executed by the indoor unit 1.

In the indoor unit 1, when the power supply is turned ON (step S1), initial values are set as the gains of the variable gain devices 32, 33, 34, and 35 by the comparing/controlling unit 44 and the cable correction value setting unit 47 (step S2). As the initial values, such values are set in the case that the length of the coaxial cable 3 is assumed as zero (0 meter). When the variable attenuators are employed as the variable gain devices 32 to 35, maximum attenuation amounts are set as the initial values.

Next, in the indoor unit 1, a count value "N1" of averaging time is set to zero (N1 = 0), and a total value "LV1" of the electric power levels is set to zero (LV1 = 0) as the initial values (step S3).

Subsequently, in the indoor unit 1, an electric power level of a signal of the transmission system is detected by the level detector 41, this detected value "M1" of the electric power level is acquired (step S4), the count value "N1" of the averaging time is incremented only by 1, and the detected value "M1" of the electric power level is added to the total value "LV1" of the electric power levels (step S5).

Next, in the indoor unit 1, such a judgment is made as to whether or not the count value "N1" of the averaging time is reached to a preselected time which has been previously set by comparing these values (step S6), and in such a case that it is so judged that the count value "N1" of the averaging time is not reached to the predetermined time, both the level detecting operation by the level detector 41 and the adding operation of the detected result are repeatedly carried out (step S4 and step S5). It should also be understood that various times may be alternatively employed as the above-explained predetermined time.

On the other hand, in the indoor unit 1, in such a case that it is so judged that the count value "N1" of the averaging time is reached to the predetermined time, such a value "L1 (= LV1/N1)" is acquired as an averaged result (step S7), while this value "L1" corresponds to a result obtained by dividing the total value "LV1" of the electric power levels by the count value "N1" of the averaging time.

Next, in the indoor device 1, a judgment is made as to whether or not information as to an averaged value "L2" of received electric power levels of signals of the transmission system has been acquired from the outdoor unit 2 by the control signal demodulating unit 37 (step S8). In the case that this information has not yet been acquired, the indoor unit 1 is brought into a waiting state until the information is acquired.

On the other hand, in the indoor unit 1, in such a case that the information as to the averaged value "L2" of the received electric power levels of the signals of the transmission system has already been acquired from the outdoor unit 2, or in the case that this information has been acquired after the waiting operation, a judgment is made as to whether or not such a value "Q" can satisfy a predetermined condition (step S9) with respect to the electric power levels of the signals of the transmission system. This value "Q" is determined from the averaged result "L1" in the indoor unit 1, the averaged result "L2" in the outdoor unit 2, and the connection value (namely, ATT value in this embodiment) set to the variable gain device 32. As this predetermined condition, such a condition that the relevant value Q (= L1 - L2 +P) becomes a predetermined target value has been employed in this embodiment.

As a result, in such a case that a judgment is made that the predetermined condition can be satisfied, in the indoor unit 1, a length of the coaxial cable 3 is judged based upon the correction value (ATT value in this embodiment) set to the variable gain device 32 (step S10); correction values related to the variable gain devices 33, 34, 35 of the reception system, the reception monitoring system, and the transmission monitoring system, which correspond to such systems other than the transmission system, are determined based upon this judged length (step S11); and voltages for controlling the gains of these variable gain devices 33, 34, 35 are set based upon these determined correction values (step S12).

As a result, the correcting operations of the gains are accomplished (step S13). In the indoor unit 1, while the count value "N1" of the averaging time is again set to zero (N1 = 0) and the total value "LV1" of the electric power levels is again set to zero (LV1 = 0) in the step S3, similar process operations are carried out (step S4 to step S17).

On the other hand, in the case that it is so judged that the above-described predetermined condition cannot be satisfied (step S9), in the indoor unit 1, the above-described value "Q (= L1 - L2 + P) " is compared with a predetermined target value (step S14).

As a consequence, in the indoor unit 1, when the above-explained value "Q" is larger than the target value, the correction value (ATT value in this embodiment) related to the variable gain device 32 of the signal of the transmission system is subtracted by 1 bit, either the gain of the variable gain device 32 is increased or the attenuation amount is decreased (step S15), and while the count value "N1" of the averaging time is again set to zero (N1 = 0) and the total value "LV1" of the electric power levels is again set to zero (LV1 = 0) in the step S3, similar process operations are carried out (step S4 to step S17).

Also, in the indoor unit 1, when the above-explained value "Q" is smaller than the target value, the correction value (ATT value in this embodiment) relate to the variable gain device 32 of the signal of the transmission system is added by 1 bit, either the gain of the variable gain device 32 is decreased or the attenuation amount is increased (step S16), and while the count value "N1" of the averaging time is again set to zero (N1 = 0) and the total value "LV1" of the electric power levels is again set to zero (LV1 = 0) in the step S3, similar process operations are carried out (step S4 to step S17).

Also, in the indoor unit 1, in such a case that the above-described value "Q" exceeds and is larger than a predetermined normal range, or smaller than the predetermined normal range as compared with the target value, it is so regarded that an abnormal condition as to the coaxial cable 3 and the like occurs, so that the occurrence of this abnormal condition is notified to an apparatus, a person, or the like, which monitor the wireless base station system of this embodiment (step S17). It should also be understood that various ranges may be alternatively employed as this normal range.

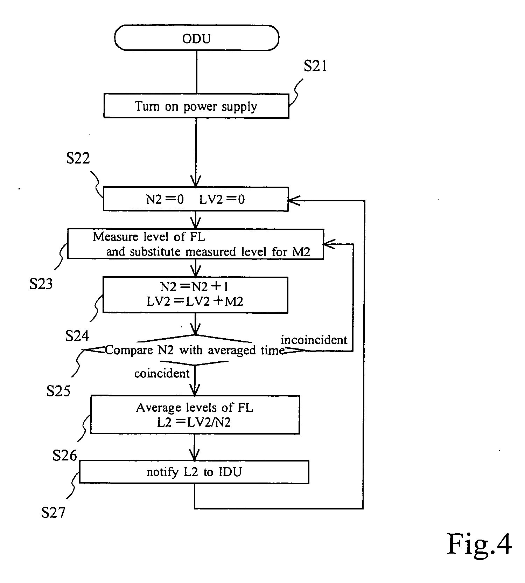

Fig. 4 represents an example of operations which are carried out by the outdoor unit 2.

In the outdoor unit 2, when the power supply is turned ON (step S21), a count value "N2" of averaging time is set to zero (N2 = 0), and a total value "LV2" of the electric power levels is set to zero (LV2 = 0) as the initial values (step S22).

Subsequently, in the outdoor unit 2, an electric power level of a signal of the transmission system is detected by the level detector 71, this detected value "M2" of the electric power level is acquired (step S23), the count value "N2" of the averaging time is incremented only by 1, and the detected value "M2" of the electric power level is added to the total value "LV2" of the electric power levels (step S24).

Next, in the outdoor unit 2, such a judgment is made as to whether or not the count value "N2" of the averaging time is reached to a preselected time which has been previously set by comparing these values (step S25), and in such a case that it is so judged that the count value "N2" of the averaging time is not reached to the predetermined time, both the level detecting operation by the level detector 71 and the adding operation of the detected result are repeatedly carried out (step S23 and step S24). It should also be understood that various times may be alternatively employed as the above-explained predetermined time.

On the other hand, in such a case that it is so judged that the count value "N2" of the averaging time is reached to the predetermined time, in the outdoor unit 2, such a value "L2 (= LV2/N2)" is acquired as an averaged result (step S26), while this value "L2" corresponds to a result obtained by dividing the total value "LV2" of the electric power levels by the count value "N2" of the averaging time.

Then, in the outdoor unit 2, the information as to the acquired value "L2" of the averaged result is included in the second monitoring/controlling signal from the control signal modulating unit 62, and then, the resultant information signal is notified with respect to the indoor unit 1 (step S27).

As previously described, in the wireless base station system of this embodiment, the below-mentioned process operations are controlled by the control circuit. That is, as to the losses at the single cable 3 where the plurality of high frequency signals (signals constituted by series of 7 waves in this embodiment) have been frequency-multiplexed, high frequency power of either an output or an input of a single frequency signal is detected by the detectors 41 and 71 respectively which have been arranged in both the apparatus 1 and 2 which are connected to each other by this cable 3; a loss of the cable 3 at this high frequency is compensated by the variable gain device 32 based upon the power detected results; and furthermore, a length of the cable 3 is specified based upon this compensated result. While using the storage contents of the memory 48 which has stored thereinto the variable gain device correction values with respect to each of lengths of the cable 3 as to predetermined frequency signal series which are different from the high frequency of the signal whose electric power has been detected, the cable losses of the respective predetermined frequency series can be compensated by the variable gain devices 33, 34, 35 for the respective predetermined frequency series.

As a consequence, in the wireless base station system of this embodiment, in such a case that the plurality of frequency signals are multiplexed on the single cable 3 and two sets of the apparatus 1 and 2 are connected to each other, for example, even if an operation is not performed by a user, then the cable losses can be automatically corrected every signal frequency. As a consequence, for instance, a calibration work of a high frequency cable when the apparatus 1 and 2 are installed can be automatically carried out. Also, even in such a case that the losses of the high frequency cable are changed due to the environmental change, the optimum correction can be carried out.

Also, in the wireless base station system of this embodiment, as to the systems other than the transmission system where the electric power is detected, even if electric power detecting operations are not carried out, then cable losses can be corrected.

Also, in the wireless base station system of this embodiment, since the averaging process unit 73 for averaging the results detected by the level detector 71 of the outdoor unit 2 has been provided on the side of this outdoor unit 2, the communication speed from the outdoor unit 2 to the indoor unit 1 can be lowered, as compared with, for example, the communication speed in the case that the function of this averaging process unit 73 is provided on the side of the indoor unit 1.

As previously explained, in the wireless base station system of this embodiment, since the correcting process operations of the cable losses can be automatically carried out, for instance, such a cumbersome calibration work required when the apparatus are installed and the maintenance works thereof are carried out can be no longer required. Also, the fluctuations in the cable loses caused by the environmental change can be automatically calibrated, and the maintenance-free system can be realized.

For example, there are many possibilities that the outdoor unit 2 is installed in an outdoor area, a tower top, and the like, it is predictable that losses of a high frequency cable are easily changed due to temperature changes of the high frequency cable. However, in this embodiment, since the correcting operations are carried out with respect to the cable losses in either the periodic manner or the continuous manner, the optimum conditions can be maintained.

In the wireless base station system of this embodiment, it should be understood that the first apparatus has been constituted by the indoor unit 1, the second apparatus has been constituted by the outdoor unit 2, and the frequency signal which becomes the reference has been constituted by the signal of the transmission system 11.

Also, in the indoor unit 1 of this embodiment, a transmission-sided reference frequency signal level detecting means has been constituted by the function of the level detector 41 and the function of the averaging process unit 43; a reception-sided reference frequency signal level detected result receiving means has been constituted by the function of the control signal demodulating unit 37; and an out-of-reference frequency signal level control means has been constituted by the function of the comparing/controlling unit 44, the function of the variable gain device 32, the function of the converged result acquiring unit 46, the function of the memory 48, the function of the cable correction value setting unit 47, and the functions of the variable gain devices 33, 34, and 35.

Further, in the indoor unit 1 of this embodiment, a reference frequency signal level control means has been constituted by the function of the comparing/controlling unit 44, and the function of the variable gain device 32; and a reference frequency signal level controlled result out-of-reference frequency signal level control mode corresponding item storage means has been arranged by the function of the memory 48 which stores thereinto corresponding items between the controlled results (cable lengths corresponding to converged results in this embodiment) by the comparing/controlling unit 44, and the controlling modes of the respective variable gain devices 33, 34, 35.

Also, in the outdoor unit 2 of this embodiment, a reception-sided reference frequency signal level detecting means has been constituted by the function of the level detector 71, and the function of the averaging process unit 73; and a reception-sided reference frequency signal level detected result transmitting means has been arranged by the function of the control signal modulating unit 62.

Next, a description is made of a second embodiment according to the invention.

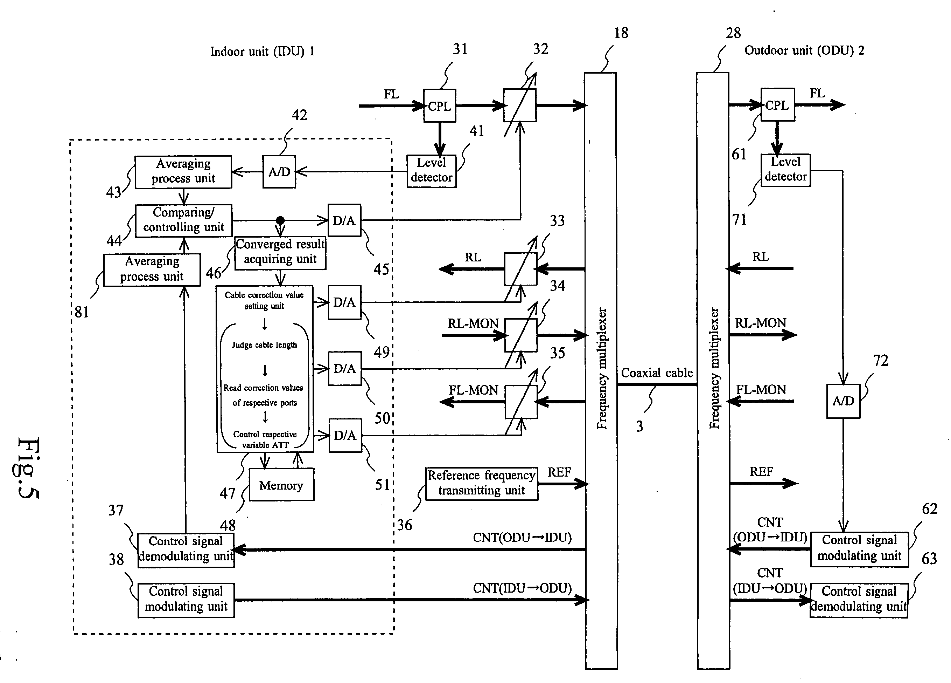

Fig. 5 indicates a structural example of a wireless base station system of this second embodiment. It should be noted that a schematic structural arrangement is indicated in the above-described arrangement of Fig. 1.

In this case, both the arrangement and operations of the wireless base station system of this second embodiment are similar to the arrangement and operations of the wireless base station system of the above-explained first embodiment shown in Fig. 2 except for the below-mentioned point, for instance, in comparison with the above-described arrangement and operations of the wireless base station system shown in Fig. 2 according to the first embodiment. That is, as to this different point, the function of the averaging process unit 73 for averaging the detected results by the level detector 71 of the outdoor unit 2 has been provided not on the side of the outdoor unit 2, but on the side of the indoor unit 1 as an averaging process unit 81. It should also be noted that the same reference numerals shown in Fig. 2 will be employed as those for denoting similar structural units indicated in Fig. 5.

In the outdoor unit 2 of this embodiment, a detected result obtained by the level detector 71 is A/D-converted by the A/D converter 72, and the information as to this A/D converted result is contained in the second monitoring control signal from the control signal modulating unit 62, and then, the resultant signal is transmitted to the indoor unit 1.

In the indoor unit 1 of this embodiment, the information as to the level detected results made by the level detector 71 of the outdoor unit 2 is demodulated by the control signal demodulating unit 37, these level detected results are averaged by the averaging process unit 81, and then, this averaged result is inputted to the comparing/controlling unit 44.

As previously explained, in the wireless base station system of this embodiment, the cable losses as to the respective frequency signals can be effectively corrected.

It should also be noted that in the outdoor unit 2 of this embodiment, a reception-sided reference frequency signal level detecting means has been constituted by the function of the level detector 71. Also, in this embodiment, a reception-sided reference frequency signal level detected result averaging means has been arranged by the function of the averaging process unit 81 employed in the indoor unit 1.

Next, other structural examples will now be described as to the above-descried embodiment (first and second embodiments) according to the invention.

As one structural example, such an arrangement may be alternatively embodied which is not equipped with the function of the averaging process unit 43 for averaging the detected results detected by the level detector 41 of the indoor unit 1, and also, the functions of the averaging process units 73 and 81 which average the results detected by the level detector 71 of the outdoor unit 2.

As one structural example, in the present embodiments, the level control operations by the variable gain devices 32, 33, 34, 35 with respect to all of the frequency signals have been carried out on the side of the indoor unit 1. Alternatively, such an arrangement (will be referred to as "arrangement A" in this example) may be embodied in which the level control operations by the variable gain devices with respect to all of these frequency signals, or a portion of these frequency signals are carried out on the side of the outdoor unit 2.

It should also be understood that although the above-explained arrangement (arrangement A) may be embodied, the arrangement according to this embodiment may become preferable with respect to: (1) in such a case that a storage table for cable lengths-to-correction values is an individual value (adjustment value written during production) every apparatus, a control operation does not become complex; and (2) generally speaking, since a change in environmental conditions on the side of an indoor unit is larger than a change in environmental conditions on the side of an outdoor unit, there are merits in view of errors and reliability if variable gain devices and a control circuit are combined with each other on the side of the indoor unit.

On the other hand, in the case that a variable gain device without adjustment may be used with respect to the above-explained item (1), and there is no difference in the environments, or there is no problem in the difference of environments with respect to the above-explained item (2), since necessary information is contained in either the first monitoring control signal or the second monitoring control signal, it is also effective to embody such an arrangement (namely, arrangement A).

As one structural example, it is also possible to arrange that while a frequency signal of a system other than the transmission system 11 is employed as a reference, cable losses are corrected. As one example, if there is such a system that a signal having a level higher than, or equal to a constant level is continuously present, it is preferable that the signal of this system is employed as the reference.

It should also be understood that in this embodiment, for example, a wireless base station system using a CDMA (Code Division Multiple Access) system is assumed. In this wireless base station system, generally speaking, since a signal having electric power equal to or higher than certain constant electric power such as a control signal is continuously present in a forward link system (transmission system) under operation, this signal may be effectively utilized as the reference. On the other hand, in this wireless base station system, in a reverse link system (reception system), such a case that no signal is present may be assumed. Also, even when there is an input, there are many possibilities that electric power is very low, so that the electric power can be hardly detected. Also, in this wireless base station system, for instance, since a signal is present only when a test signal is inputted from an external source in the monitoring systems (transmission monitoring system and reception monitoring system), levels can hardly be continuously controlled.

Also, as an application subject of the invention, the invention is not limited only to such a system arranged by an indoor unit and an outdoor unit, but may be alternatively applied to other systems, for instance, the invention may be specifically and advantageously applied to a system in which signals having electric power levels which are higher than or equal to a certain constant power level are continuously present in one or more systems; applied to a system in which a plurality of signals are multiplexed on a frequency axis, and transfer paths are grouped; applied to a system in which a changing amount of a loss in a transfer path may be previously predicted; and the like.

Also, an application subject of the invention corresponds to such a system that a first apparatus is connected to a second apparatus by employing a wired cable. Alternatively, such an arrangement similar to that of the invention may be applied to another system in which the first apparatus is connected to the second apparatus via a wireless transfer path.

Generally speaking, in wireless communications, there are many cases that it is practically difficult to previously predict fluctuation amounts of transfer paths as to respective frequencies, and signals as to the respective frequencies are separately fluctuated in wireless sections due to a fading effect, or the like. As a result, there are some cases that the invention cannot be easily applied to the above-described wireless communication system. However, a similar arrangement may be applied.

In this case, the invention is not always limited only to the above-described arrangements of the communication system, the first apparatus, and the second apparatus, but various arrangements may be alternatively employed. Also, the invention may be alternatively provided as, for example, either a method or a manner capable of executing the process operations according to the invention, provided as a program capable of realizing such a method, or manner, and provided as a recording medium which records thereon this program. Further, the invention may be alternatively provided as various apparatus and various systems.

Also, the invention is not always limited only to the above-explained application field, but may be applied to other various fields.

Also, as the various sorts of process operations which are executed in the communication system, the first apparatus, and the second apparatus, according to the invention, for instance, such an arrangement may be employed in which in a hardware resource equipped with a process or, a memory, and the like, the processor executes a control program stored in a ROM (Read-Only Memory), so that a level control operation is carried out. Also, for example, respective functional means for executing this process operation may be alternatively constructed as independent hardware circuits.

Further, the invention may be alternatively grasped as a floppy (registered trademark) disk which has stored thereinto the above-explained control program, and may be alternatively grasped as a computer readable recording medium such as a CD (Compact Disc)-ROM which has recorded thereon the control program, and may be alternatively grasped as this control program itself. Since the above-described control program is entered from the recording medium to the computer so as to be executed by the computer, the process operation according to the invention may be executed.

### INDUSTRIAL APPLICABILITY

As previously described, in accordance with the communication system related to the invention, in the system arrangement in which a plurality of frequency signals are communicated between a first apparatus and a second apparatus via a common cable, in the first apparatus, a level of a frequency signal is detected which constitutes a reference among the frequency signals which are transmitted via the cable with respect to the second apparatus; and in the second apparatus, a level of a frequency signal is detected which constitutes a reference and is received from the first apparatus via the cable. Further, in the first apparatus and the like, a level of a frequency signal other than the frequency signal which constitutes the reference and is communicated between the first apparatus and the second apparatus via the cable is controlled based upon a compared result between the result detected in the first apparatus, and the result detected in the second apparatus. As a consequence, level loss components of the respective frequency signals in the cable can be effectively corrected.

## Claims

1. A communication system in which a plurality of frequency signals are communicated between a first apparatus and a second apparatus via a common cable, wherein:
the first apparatus is comprised of: transmission-sided reference frequency signal level detecting means for detecting a level of a frequency signal which constitutes a reference among the frequency signals which are transmitted via the cable with respect to the second apparatus;
the second apparatus is comprised of: reception-sided reference frequency signal level detecting means for detecting a level of a frequency signal which constitutes a reference and is received from the first apparatus via the cable; and,
said communication system is further comprised of: out-of-reference frequency signal level control means for controlling a level of a frequency signal other than the frequency signal which constitutes the reference and is communicated between the first apparatus and the second apparatus via the cable based upon a compared result between the result detected by said transmission-sided reference frequency signal level detecting means of the first apparatus, and the result detected by said reception-sided reference frequency signal level detecting means of the second apparatus.

2. A communication system as claimed in claim 1 wherein: the transmission-sided reference frequency signal level detecting means of said first apparatus detects an averaged value of the levels of the frequency signal which constitutes the reference among the frequency signals transmitted via the cable with respect to said second apparatus;
the reception-sided reference signal level detecting means of said second apparatus detects an averaged value of the levels of the frequency signal which constitutes the reference and is received from said first apparatus via the cable;
the second apparatus is further comprised of: reception-sided reference frequency signal level detected result transmitting means for transmitting the detected result by said reception-sided reference frequency signal level detecting means with respect to said first apparatus;
the first apparatus is further comprised of: reception-sided reference frequency signal level detected result receiving means for receiving the detected result by the reception-sided reference frequency signal level detecting means of said second apparatus, which is transmitted by the reception-sided reference frequency signal level detected result transmitting means of said second apparatus;
said out-of-reference frequency signal level control means is provided in said first apparatus;
said out-of-reference frequency signal level control means includes reference frequency signal level control means for controlling a level of a frequency signal which constitutes the reference and is transmitted via the cable to said second apparatus based upon a compared result between the detected result by said transmission-sided reference frequency signal level detecting means and the detected result which is received by the reception-sided reference frequency signal level detected result receiving means, and also includes reference frequency signal level controlled result out-of-reference frequency signal level control mode corresponding item storage means for storing thereinto a corresponding item between the controlled result by said reference frequency signal level control means and a mode for controlling the level of the frequency signal other than the frequency signal which constitutes the reference and is communicated between said first apparatus and said second apparatus via the cable; and
said out-of-reference frequency signal level control means controls the level of the frequency signal other than the frequency signal which constitutes the reference and is communicated between said first apparatus and said second apparatus via the cable based upon the storage content of said reference frequency signal level controlled result out-of-reference frequency signal level control mode corresponding item storage means in such a control mode corresponding to the controlled result by said reference frequency signal level control means.

3. A communication system as claimed in claim 1, or claim 2 wherein:
said communication system corresponds to a wireless base station system;
said first apparatus corresponds to an indoor unit;
said second apparatus corresponds to an outdoor unit;
said frequency signal which constitutes the reference corresponds to a signal of a transmission system; and
a plurality of frequency signals are multiplexed and the multiplexed signal is communicated between the first apparatus and the second apparatus via the cable.
